# EUROPEAN PATENT SPECIFICATION

(11) **EP 4 040 253 B1**
(45) Date of publication and mention of the grant of the patent: **09.04.2025**
(21) Application number: 21156142.8
(22) Date of filing: 09.02.2021
(51) Int. Cl.: G05D 1/00

(54) **VEHICLE, INFRASTRUCTURE COMPONENT, APPARATUS, COMPUTER PROGRAM, AND METHOD FOR A VEHICLE**
FAHRZEUG, INFRASTRUKTURKOMPONENTE, VORRICHTUNG, COMPUTERPROGRAMM UND VERFAHREN FÜR EIN FAHRZEUG
VÉHICULE, COMPOSANT D'INFRASTRUCTURE, APPAREIL, PROGRAMME INFORMATIQUE ET PROCÉDÉ POUR UN VÉHICULE

(43) Date of publication of application: 10.08.2022
(73) Proprietor: VOLKSWAGEN AG, 38440 Wolfsburg (DE)
(72) Inventor: El Assaad, Ahmad, 38448 Wolfsburg (DE)

(56) References cited:
- EP-A1- 3 279 053
- DE-A1- 102019 204 943
- US-A1- 2020 192 360

## Description

The present invention relates to a vehicle, an infrastructure component, an apparatus, a computer program, and a method for a vehicle. In particular, embodiments of the present disclosure relate to a concept for handover of control over a vehicle when switching from automated driving mode to remote driving mode.

Several vehicle concepts provide for operating vehicles in different modes for automated and remote driving, respectively. Remote driving sometimes is referred to as "tele-operated driving (ToD)". In such concepts, vehicles, e.g., are operated at times in a remote driving mode where a remote driver operates the vehicle from remote and at other times in an automated driving mode where the vehicle is operated at least partially automatically. In some concepts, it may be desired to switch from the automated driving mode to the remote driving mode while driving and in a safe way. The vehicle, e.g., switches from the automated driving mode to the remote driving mode in so-called "deadlock situations" which the vehicle cannot resolve itself. In practice, it takes resources (e.g. communication resources, human resources, etc.) every time the mode switches from the automated driving mode to the remote driving mode.

Document DE 10 2019 204 943 A1 refers to a concept for teleoperated driving which provides for adjusting the teleoperated driving based on a predicted quality of service of a communication connection between a vehicle and a control center.

Document EP 3 279 053 A1 refers to an operator-evaluation system for an automated vehicle which includes a traffic-detector and a controller. The traffic-detector is used to determine a complexity-ranking of a traffic-scenario approached by a host-vehicle. The controller is in communication with the traffic-detector and is configured to operate the host-vehicle, depending on the complexity-ranking and a skill-ranking of an operator in an automated-mode, monitored mode, or manual mode.

Document US 2020 / 0 192 360 A1 relates to a concept of determining a risk of operating a vehicle in a current mode and switching modes.

Document US 2020 / 0 139 991 A1 provides a concept for switching a travel mode between a manual mode and an autonomous mode of a vehicle based on a sensing signal which is indicative of a force applied to a steering wheel of the vehicle.

Document US 2020 / 0 017 124 A1 provides a concept for switching an operational mode of a vehicle from an autonomous mode to a manual mode and for indicating to an occupant of the vehicle to assume manual control of the vehicle based on an estimated reaction in advance of a condition to change the operational mode.

However, the said documents remain silent about a concept for transferring control of the vehicle when switching from the autonomous mode in a remote driving mode.

Hence, there may be a demand for an improved concept for transferring control of a vehicle when switching from an automated driving mode to a remote driving mode of the vehicle. This demand may be satisfied by the subject-matter of the appended independent and dependent claims.

Embodiments of the present disclosure are based on the finding that switching from an automated driving mode to a remote driving mode of a vehicle is particularly safe when a traffic situation is convenient and safe for a remote driver to take over control of the vehicle. Since different remote drivers may have various driving preferences, different traffic situations may be convenient and safe with respect to various driving preferences of different drivers. It is also a finding that switching from the automated driving mode to the remote driving mode takes various resources (e.g. computing power, communication resources, human resources) and may impair a driving comfort. Thus, a basic idea of the present disclosure is to avoid rapid changes of modes to at least lower a consumption of resources and impairment of the driving comfort.

Embodiments of the present disclosure provide, in accordance with the appended claims, a method for a vehicle configured to be remotely operated in a remote driving mode and to be operated at least partially automatically in an automated driving mode. The method comprises determining driving preferences of the remote driver from the driving behavior of the remote driver. Also, the method comprises predicting, based on the driving preferences, information on a future traffic situation for switching from the automated driving mode to the remote driving mode. Further, the method comprises determining a predicted quality of service (pQoS) of a communication link for the remote driving mode. The method also comprises predicting a remote operation interval for which the vehicle is at least operable in the remote driving mode based on the pQoS and the information on the future traffic situation. Further, the method comprises deciding for or against a change from the automated driving mode to the remote driving mode based on the remote operation interval. The future traffic situation, e.g., is a moment or an interval where it is convenient for the remote driver to take over control of the vehicle in regard to the driving preferences. The respective information on the future traffic situation, e.g., indicates a position, area, time, and/or a time interval of the future traffic situation. In other words, the information on the future traffic situation indicates where and/or when it may be convenient and/or safe for the remote driver to take over control of the vehicle. The remote operation interval, e.g., indicates for how long (regarding time and/or space) the remote driving mode can be maintained on condition of a (safe) handover when it is convenient and/or safe for the remote driver to take over control of the vehicle. So, the method enables a strategy for safe and also (economically) reasonable changes between the automated driving mode and the remote driving mode. Thus, the proposed method may serve to lower the consumption of resources and decrease impairment of the driving comfort. In particular, the proposed concept is applicable for transitions during driving, i.e. without stopping the vehicle.

In some embodiments, predicting information on the future traffic situation comprises predicting the information on the future traffic situation based on information on a current traffic situation, information on one or more present and/or planned maneuvers of the vehicle in the automated driving mode, and/or information on a planned route. The information on the current traffic situation allows, e.g., to determine whether the current traffic situation is convenient for the handover, e.g., for an immediate or soon handover of control of the vehicle for switching from the automated driving mode to the remote driving mode. The information on the planned route and/or the one or more present and/or planned maneuvers allows to determine when and/or where it is convenient for the remote driver to take over control with respect to driving characteristics and/or a style of driving in the automated driving mode.

According to the present invention, deciding for or against the change from the automated driving mode to the remote driving mode comprises obtaining a threshold for the remote operation interval. According to the present invention, the method provides for deciding for switching from the automated driving mode to the remote driving mode if the remote operation interval exceeds the threshold and deciding against switching from the automated driving mode to the remote driving mode if the remote operation interval falls short of the threshold. The threshold can be defined so as to avoid switching to the remote driving mode for an uneconomically short period of time. According to the present invention, the threshold is at least equal to or larger than a reaction time it takes the remote driver to react for taking over control of the vehicle when switching to the remote driving mode.

According to some embodiments, predicting the remote operation interval comprises obtaining information on a handover duration it takes to transfer control over the vehicle when switching from the automated driving mode to the remote driving mode and predicting the remote operation interval based on the handover duration. This allows a more accurate prediction of the remote operation interval and, thus, a more valid decision for or against switching from the automated driving mode to the remote driving mode.

In some embodiments, the method further comprises determining a handover time within the remote operation interval for switching from the automated driving mode to the remote driving mode. The handover time allows to coordinate processes for switching to the remote driving mode at the vehicle and at a remote control center for remote driving.

Predicting the future traffic situation may also comprise predicting the information on the future traffic situation based on a comparison of the driving preferences and one or more future traffic situations. The comparison allows a deterministic way to determine when and/or where it is safe and/or convenient to hand over control of the vehicle. For example, the comparison enables to determine when and/or where to hand over the control based on a deviation of the future traffic situation from the driving preferences. For example, the hand over can be carried out where and/or when the deviation is less than a predetermined threshold. Thus, the hand over can be carried out when and/or where the traffic situation approximately corresponds to the driving behavior of the driver.

The driving preferences, e.g., comprise one or more conditions for the traffic situation for switching from the automated driving mode to the remote driving mode and predicting information on the future traffic situation, e.g., comprises predicting the information on the future traffic situation based on a comparison of the one or more conditions and one or more future traffic situations. This allows to determine multiple traffic situations for switching from the automated driving mode to the remote driving mode. In particular, this allows to determine the latest future traffic situation and select the latest future traffic situation for switching to the remote driving mode to give the remote driver as much time as possible to prepare himself or herself to take over control of the vehicle.

The conditions, e.g., comprise conditions for an acceleration, a velocity of the vehicle, steering angle, a road profile, and/or a distance to one or more other vehicles in the environment of the vehicle. The conditions, e.g., are determined based on the driving behavior of the driver and such that it is convenient for the driver to take over control of the vehicle if at least one, some, or all of the conditions are fulfilled - for example, if the acceleration and the velocity of the vehicle fall short of the acceleration and velocity defined by the conditions and/or if the distance to the other vehicles is larger than the distance defined by the conditions. Also, the driving behavior may indicate that the driver, e.g. a new driver, is unsteady in curves. Accordingly, one of the conditions may proscribe handovers in curves. In turn, the one or more conditions may allow the handover in curves for advanced drivers.

In practice a plurality of (estimated) future traffic situations may be considered to determine the future traffic situation (suitable) for switching from the remote driving mode to the manual driving mode. This allows, e.g., to determine the most convenient and/or one or more intervals for switching from the remote driving mode to the manual driving mode.

According to some embodiments, the method further comprises causing the vehicle in the automated driving mode to adapt driving parameters affecting the future traffic situation to fulfill the conditions. In this way, a convenient future traffic situation for switching from the automated driving mode to the remote driving mode may be actively created or forced.

The remote operation interval, e.g., is a time interval for which the traffic situation fulfills the one or more conditions and the pQoS allows sufficient communication via the communication link for remote driving.

According to some embodiments, deciding against switching from the automated driving mode to the remote driving mode comprises deciding for switching from the remote driving mode to a manual driving mode of the vehicle. In this way, e.g., deadlock situation can be resolved by a driver in the vehicle when it is not possible or reasonable to switch to the remote driving mode.

Other embodiments provide a computer program having a program code for performing at least one of the methods of the preceding claims, when the computer program is executed on a computer, a processor, or a programmable hardware component.

Further embodiments provide an apparatus comprising. The apparatus comprises one or more interfaces for communication and a data processing circuit. The data processing circuit is configured to control the one or more interfaces. Further, the data processing circuit and the one or more interfaces are configured to execute one of the methods proposed herein.

Other embodiments provide a vehicle or an infrastructure component comprising the apparatus proposed herein.

Some other features or aspects will be described using the following non-limiting embodiments of apparatuses or methods or computer programs or computer program products by way of example only, and with reference to the accompanying figures, in which:
Fig. 1 illustrates a flowchart of an embodiment of a method for a vehicle;
Fig. 2 illustrates a block diagram schematically illustrating an embodiment of an apparatus for carrying out the proposed concept; and
Fig. 3 illustrates a flow chart schematically illustrating an application of the proposed concept. Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Tele-operated driving can be deployed to implemented mobility and transport services like tele-operated parking, tele-operated taxi, and tele-operated goods transport in different automation levels. For safe deployment of tele-operated driving in combination with automated systems with different level of automation, it a challenge to perform a safe handover when switching from automated driving (i.e. from an automated driving mode) to tele-operation driving (i.e. in a remote driving mode). A handover, e.g., is necessary in so-called deadlock situations where a vehicle cannot resolve a traffic situation automatically in the automated driving mode. One challenge is to provide a safe handover. Another challenge is to determine whether it is (economically) reasonable to switch to remote driving mode.

Hence, there may be a demand for an improved concept for transferring control of a vehicle when switching from automated driving mode to a remote driving mode.

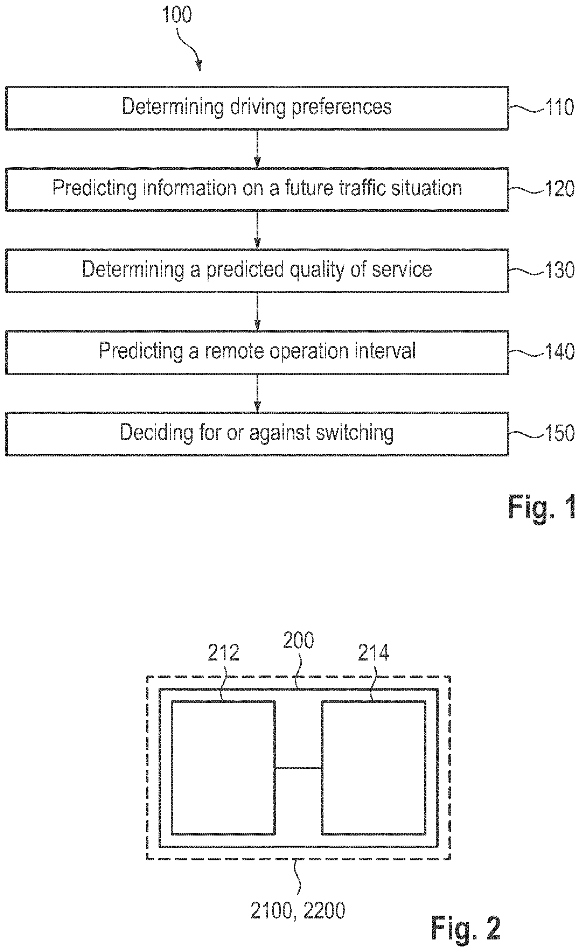

Fig. 1 illustrates a flowchart of an embodiment of a method 100 for a vehicle configured to be remotely operated in a remote driving mode and to be operated at least partially automatically in an automated driving mode. The vehicle can be a car, a bus, a truck, or the like. For the remote driving mode, the vehicle may communicate with a remote control center which exhibits equipment for the remote driver to control the vehicle from remote. The remote operator, thus, can have full or at least partial control over the vehicle and, e.g., maneuver the vehicle, accelerate, decelerate, steer, and/or control one or more functions (e.g. the electronic stability control, ESC, the anti-lock braking system, ABS, and/or the like) in the remote driving mode. Thus, the driver of the vehicle may not need to maneuver the vehicle himself or herself in the remote driving mode. In the remote driving mode, the vehicle, e.g., monitors its environment using one or more (various) sensors (e.g. camera/s, lidar sensor/s, radar sensor/s, and/or the like) to provide the remote operator with information from the sensors, e.g., on a course of a road and/or traffic events in the environment to enable the remote operator to maneuver the vehicle. In the automated driving mode, the vehicle is controlled fully or partially automatically. Also, the vehicle may be configured to be "manually" operated, i.e. by a (manual) driver in the vehicle, in an manual driving mode.

In some scenarios, an imminent deadlock situation is predicted, e.g., in view of an upcoming construction site, or any other circumstances which the vehicle cannot handle automatically in the automated driving mode. Thus, it may be desired or necessary to switch from the automated driving mode to the remote driving mode. Also, reasons other than imminent deadlock situations can make it necessary or desirable to switch from the automated driving mode to the remote driving mode. Method 100 provides a concept for determining if it is safe and (economically) reasonable to switch from the automated driving mode to the remote driving mode.

As can be seen from the flow chart, method 100 comprises determining 110 driving preferences of the remote driver from the driving behavior of the remote driver. The driving behavior can be understood as a manner of driving of the remote driver when the driver maneuvers the vehicle, e.g., in the remote driving mode.

In order to determine the driving behavior, data related to the remote driver and to the driving behavior may be collected in the remote driving mode. Further, the data, e.g., comprises information on the vehicle. The information on the vehicle, e.g., indicates an acceleration (in 2D or 3D if available), speed/velocity (in 2D or 3D if available), distance to one or more other vehicles, a location of the vehicle, and/or a road profile and/or geometry of a road travelled by the vehicle. So, the driving behavior may be obtained from the collected data. The data may also comprise information on the remote driver. The information on the remote driver, e.g., indicates a psychological state (happy, sad, angry, etc.), a health state, and/or the gender and/or age of the remote driver. This allows to associate the driving behavior with the health state and/or the psychological state and, thus, to select driving preferences for a respective remote driver in accordance with a current psychological state and/or current health state of the remote driver. This allows to obtain personalized driving preferences for different remote drivers.

Also, the data may be indicative of a (minimum) reaction time of the driver to react to requests for remote driving and to take over control of the vehicle. The reaction time allows to determine more precisely how long the vehicle is operable in the remote driving mode, as stated in more detail later. The information on the remote driver can be retrieved from the remote control center. In some embodiments, the driving preferences are determined by the vehicle. In order to save resources of the vehicle, the driving preferences are optionally determined remote from the vehicle, e.g., by an infrastructure component. In such embodiments where the driving preferences are determined by the infrastructure component, the data can be received via the vehicle. This allows to omit an additional (direct) connection between the remote control center and the infrastructure component and to synchronize the information on the vehicle with the information on the remote driver on the vehicle. In particular, the data can be collected and transmitted with the same rate of cooperative awareness messages of the vehicle. So, the rate may depend on the speed/velocity of the vehicle. The higher the velocity, the higher may be the rate for a more accurate determination.

The vehicle, the remote control center, and/or the infrastructure component, e.g., communicate via a communications network. The communications network may use one or more arbitrary communication technologies and/or standards to communicatively connect the vehicle, the remote control center, and/or the infrastructure component. In particular, the communications network may be a mobile communications network. The (mobile) communications network may, for example, be or comprise an Orthogonal Time Frequency Space (OTFS) system or one of the Third Generation Partnership Project (3GPP)-standardized mobile communications networks. The communications network may correspond to or comprise a mobile communication system of the 4^{th} or 5th Generation (4G, 5G) and may use mm-Wave technology. The communications network may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communications networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

The infrastructure component, e.g., comprises or corresponds to a cloud system in the mobile communications network. In some embodiments, the collected data is processed using an appropriately trained artificial intelligence (AI) algorithms for determining the driving behavior and/or the driving preferences from the collected data.

The driving preferences, e.g., are indicative of a function, a mean, a maximum, or a minimum value for the velocity, a steering angle, the acceleration, and/or the distance to other vehicles. The driving preferences can be defined such that they indicate under which circumstances it is convenient for the remote driver to take over control of the vehicle. The driving preferences can be also indicative of "driving capabilities" of the remote driver which represent circumstances under which the remote driver is able to take over control of the vehicle safely. Although the present disclosure merely refers to the velocity, the steering angle, the acceleration, and/or the distance to other vehicles, it is noted that also one or more other or further criteria may be used to determine and/or represent the driving preferences.

Optionally, the remote driver can also specify or define the driving behavior by himself using a user interface

Also, method 100 comprises predicting 120, based on the driving preferences, information on a future traffic situation for switching from the automated driving mode to the remote driving mode. In context of the present disclosure, the (future) traffic situation can be understood as a momentary or temporary scene that the vehicle "experiences" or to which the vehicle is exposed. Accordingly, the future traffic situation for switching from the automated driving mode to the remote driving mode can be understood as a scene for which it may be convenient for the remote driver to take over control with respect to the driving preferences. The information on the future traffic situation, e.g., is indicative of a time and/or a location of the future traffic situation convenient/suitable for switching from the automated driving mode to the remote driving mode with regard to the driving preferences of the remote driver. The future traffic situation, e.g., is convenient/suitable for switching from the automated driving mode to the remote driving mode with regard to the driving preferences if the future traffic situation is reconcilable with the driving preferences. This, e.g., is the case if/when the vehicle's acceleration, steering angle, velocity, and/or distance to other vehicles in the future traffic situation differs no more than by a predefined deviation from the driving preferences. In order to determine the information on the future traffic situation, a plurality of estimated future traffic situations and/or an estimated future development of the traffic situation of the vehicle may be compared to the driving preferences of the remote driver. In practice, the information on the future traffic situation may be indicative of a time, a time interval, a position, and/or an area/road section where and/or when it is safe and/or convenient for the remote driver to take over control of the vehicle.

Predicting 120 information on the future traffic situation may comprise predicting the information on the future traffic situation based on information on a current traffic situation, information on one or more present and/or planned maneuvers of the vehicle in the automated driving mode, and/or information on a planned route.

For example, the current traffic situation indicates that, based on the driving preferences, it may be convenient for the driver to take over the control soon or within a certain time as of now. So, the future traffic situation may be a future traffic situation within the certain time as of now. Accordingly, if the current traffic situation is convenient for switching from the automated driving mode to the remote driving mode, the information on the future traffic situation may be indicative of a certain time interval as of now for switching from the remote driving mode to the manual driving mode. In order to monitor the current traffic situation, the vehicle is equipped with one or more environmental sensors (e.g. Lidar sensor, radar sensor, camera, ultra-sonic sensor, etc.).

The information on the on one or more present and/or planned maneuvers of the vehicle in the automated driving mode, and/or information on a planned route indicate when and/or where in the future it may be convenient for the remote driver to take over control of the vehicle. The planned route, e.g., is a path or a plurality of trajectories which the vehicle will follow. The information on the planned route may be indicative of a road profile, road conditions, a course of the road, and/or locations where the vehicle accelerates, turns, decelerates, or stops. So, the planned route as well as the present and/or planned maneuvers may indicate when and/or where the vehicle accelerates, brakes, turns, etc.. It is a finding that it is inconvenient for the remote driver to take over the control while the vehicle accelerates, brakes, and/or turns. Accordingly, the future traffic situation may be a situation where the vehicle does not brake, accelerate, and/or change the direction of the vehicle. Thus, the information on the future traffic situation may indicate where and/or when the vehicle does not accelerate, brake, and/or turn according to the one or more present and/or planned maneuvers of the vehicle in the automated driving mode, and/or the information on the planned route.

Further, method 100 comprises determining 130 a predicted quality of service (pQoS) of a communication link for the remote driving mode. The pQoS is, e.g., determined from a history of a quality of service (QoS) of the communication link and/or a location of the vehicle. For example, it is known from the history that in preceding situations where the vehicle entered a tunnel the QoS and/or the communication link worsens such that remote driving is not possible for a time in the tunnel. Thus, the pQoS can be determined from the location of the vehicle and the history. The pQoS also may be determined in another way, e.g., from a past development of the QoS. The pQoS, e.g., allows to predict an area, a time, and/ or a duration for which a quality of service (e.g. data rate, latency, etc.) is sufficient for remote driving.

Method 100 further comprises predicting 140 a remote operation interval for which the vehicle is at least operable in the remote driving mode based on the pQoS and the information on the future traffic situation. The remote operation interval can be understood as an interval after switching from automated driving mode to remote driving mode in accordance with the information on the future traffic situation and for which the communication link (continuously) has sufficient QoS according to the pQoS.

Depending on the scenario, the information on the future traffic situation or the pQoS may define when and/or where the remote operation interval starts. In some scenarios, the information on the future traffic situation indicates when and/or where it is safe and/or convenient for the remote driver to take over control of the vehicle while the pQoS is sufficient for remote driving. In such a scenario, the information on the future traffic situation defines when and/or where the remote operation interval starts. In other scenarios, the pQoS indicates when and/or where the pQoS becomes sufficient for remote driving while it is safe and/or convenient for the remote driver to take over control of the vehicle. In such a scenario, the pQoS defines when and/or where the remote operation interval starts. Also, the pQoS indicates when and/or where the pQoS becomes insufficient for remote driving and/or for (at least) how long the pQoS is sufficient for remote driving. So, the pQoS may indicate when and/or where the remote operation interval ends. The remote operation interval, e.g., is a period of time or a distance for which the vehicle is operable in the remote driving mode.

Method 100 also comprises deciding 150 for or against switching from the automated driving mode to the remote driving mode based on the remote operation interval. For this, the remote operation interval may be compared to a threshold. The threshold, e.g., is a time interval or distance threshold. If the remote operation interval exceeds or is equal to the threshold it is decided for switching or changing from the automated driving mode to the remote driving mode. Otherwise, if the remote operation interval falls short of the threshold, it is decided against switching/changing from the automated driving mode to the remote driving mode. Optionally, it is also decided against switching from the automated driving mode to the remote driving mode if the remote operation interval is equal to the threshold. The time interval and/or the distance threshold may be chosen such that the remote driver is able to react to the handover of control over the vehicle, to resolve a predicted deadlock situation, and/or such that it is economically reasonable to switch to the remote driving mode for the chosen time interval. The threshold, e.g., is a time interval of ten or a few tens of seconds, or of one or few minutes. Optionally, the time interval can be shorter or longer.

The decision for or against switching may then be communicated to the vehicle and the remote control center to orchestrate or avoid switching from the automated driving mode to the remote driving mode.

The above will be explained in more detail below with reference to an exemplary scenario. In the automated driving mode, the vehicle may not be able to maneuver itself automatically when entering and travelling around in an underground garage. So, it is, e.g., predicted that a deadlock situation occurs when the vehicle enters and travels around in an underground garage. In an entry of the underground garage, the QoS may be still sufficient while inside the underground garage, the QoS may become insufficient for remote driving and the driver in the vehicle may need to take over control. Accordingly, the pQoS may indicate a point in time or a position when or where the QoS becomes insufficient when entering or travelling around in the underground garage. In this exemplary scenario, the information on the future traffic situation may suggest switching from the automated driving mode to the remote driving mode on a straight before turning into the entry of the underground garage, as it is inconvenient and/or unsafe for the remote driver to take over control afterwards, e.g., when the vehicle turns into the entry, according to the driving preferences of the remote driver. Accordingly, the remote operation interval is the time interval or (road) section from where or when the vehicle switches to the remote driving mode on the said straight to when or where the QoS is assumed to become insufficient. The remote operation interval may be a time interval of only a few seconds before the QoS becomes insufficient and driver in the vehicle takes over control in the underground garage. Such rapid changes of modes may be disturbing for the driver in the vehicle and uneconomical in view of resources (computing power, human resources, time, etc.) for switching from the automated driving mode to the remote driving mode. Hence, the vehicle may desist from switching from the automated driving mode to the remote driving mode for the remote operation interval. Instead, the vehicle may switch from the automated driving mode to the manual driving mode, where the driver in the vehicle controls it, in order to save resources for additional mode changes. In other scenarios, the remote operation interval may be longer and it is decided for switching from the automated driving mode to the remote driving mode.

It is noted that the proposed concept may be also applied in other scenarios where the vehicle is operable in the remote driving mode for a limited time interval or (road) section.

In some embodiments, predicting 140 the remote operation interval also comprises obtaining information on a handover duration it takes to transfer control over the vehicle in the change from the automated driving mode to the remote driving mode and predicting the remote operation interval based on the handover duration. This duration, e.g., is indicative of a communication and/or processing latencies in switching from the automated driving mode to the remote driving mode. Also, the handover duration may be indicative of a duration which the remote driver needs to react and to take over the control over the vehicle. Regarding the above exemplary scenario, the handover duration, e.g., is subtracted from the time interval or (road) section from where or when the vehicle switches to the remote driving mode to when or where the QoS is assumed to become insufficient. Thus, the remote operation interval more accurately indicates the time interval and/or road section when and/or where the remote driver controls the vehicle. This allows to better weigh/decide/determine whether it is reasonable to switch from the automated driving mode to the remote driving mode.

According to the present invention, the driving preferences comprise one or more conditions for the future traffic situation and predicting 120 information on the future traffic situation accordingly comprises predicting the information on the future traffic situation based on a comparison of the one or more conditions and one or more future traffic situations. The conditions may prohibit switching in predefined traffic situations, e.g., while the vehicle is going through a curve, a construction site, and/or when the vehicle is in other complex or challenging situations. Optionally, the conditions correspond to or comprise conditions for the acceleration, the deceleration, the velocity of the vehicle, a steering angle, the road profile, and/or the distance to one or more other vehicles in the environment of the vehicle and, e.g., are defined such that it is convenient and/or safe for the remote driver to take over control of the vehicle if one, multiple, or all of the conditions are fulfilled for a future traffic situation. The conditions, e.g., are indicative of respective ranges and/or thresholds for the acceleration, the deceleration, the velocity, and/or the distance. The thresholds may be expressed by:
- a maximum speed bound;
- a maximum acceleration bound; and/or
- a minimum bound for a distance to one or more other vehicles in the environment of the vehicle.

The conditions may be fulfilled for a future traffic situation if the acceleration, the deceleration, and/or the velocity fall short of and/or the distance exceeds the respective threshold in the future traffic situation.

The driving preferences may be classified for remote driving in a look-up table and dependent on the location, road profile, the psychological state, the health state and on the gender and/or age of the remote driver. Thus, various driving preferences can be selected for a remote driver based on his or her gender, age, and/or his or her current psychological state and/or current health state. Also, the driving behavior and the driving preferences can be continuously updated in the remote driving mode based on further collected data, information on the remote driver, and/or information on the vehicle.

Accordingly, the remote operation interval may be a time interval for which the future traffic situation fulfills the one or more conditions and the pQoS allows sufficient communication via the communication link for remote driving to provide a safe and seamless handover.

In some scenarios, the conditions are not expected to be met before the deadlock situation or other reasons for switching to the remote driving mode occur, e.g., since the vehicle in the automated driving mode generally drives faster and/or with less distance to other vehicles than it is reconcilable with the driving preferences of the driver in the vehicle. This, e.g., happens when the vehicle travels in a platoon of interconnected vehicles driving automatically (platooning). Therefore, the proposed concept may provide for causing the vehicle in the automated driving mode to adapt driving parameters affecting the future traffic situation to fulfill the conditions. In this way, the vehicle, e.g., is caused to leave the platoon and increase the distance to other vehicles. The driving parameters, e.g., are indicative of parameters affecting the velocity, the acceleration, the deceleration, a travel direction, steering angle, and/or the like.

In practice, multiple future traffic situations or an interval of future traffic situations may be save and/or convenient for switching from the automated driving mode the remote driving mode.

To coordinate the vehicle and the remote control center, the proposed concept may also provide for determining a handover time and/or a handover place for switching from the automated driving mode to the remote driving mode. Thus, the remote control center and the vehicle can coordinate their timing for switching from the automated driving mode to the remote driving mode using the handover time and/or handover place. The vehicle, e.g., gives up and the remote control center takes over the control of the vehicle at the handover time and/or the handover place.

To give the remote driver as much time as possible to react and prepare for taking over control of the vehicle, the handover time and/or the handover place may be indicative of the latest future traffic situation which is suitable for switching from the automated driving mode to the remote driving mode.

The proposed concept can be implemented in the vehicle or an infrastructure component (e.g. an external server or cloud system), i.e. method 100 may be carried out by the vehicle or the infrastructure component.

The proposed concept may be also implemented in a computer program or an apparatus. Fig. 2 illustrates a block diagram schematically illustrating an embodiment of an apparatus 200 for implementing the proposed concept.

Apparatus 200 comprises one or more interfaces 212 for communication and a data processing circuit 214 configured to control the one or more interfaces 212. The data processing circuit 214 and the one or more interfaces 212 are configured to execute one of the methods described herein.

In embodiments, the one or more interfaces 212 may correspond to any means for obtaining, receiving, transmitting, or providing analog or digital signals or information, e.g., any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 212 may comprise components to enable in accordance with an embodiment of method 100 communication for receiving information on the driving behavior of the remote driver and/or on information indicative of the pQoS and/or QoS. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 212 may be coupled to one or more antennas, which may correspond to any transmit and/or receive antennas, such as horn antennas, dipole antennas, patch antennas, sector antennas etc. In some examples the one or more interfaces 212 may serve the purpose of transmitting the decision for or against switching from the automated driving mode to the remote driving mode to the vehicle and the remote control center.

As shown in Fig. 2 the one or more interfaces 212 are coupled to the data processing circuit 214 of the apparatus 200. In embodiments the communication circuit 214 may be implemented using one or more processing units, one or more processing devices, any means for processing, such as a processor, a computer or a programmable hardware component being operable with accordingly adapted software. In other words, the described functions of the data processing circuit 214 may as well be implemented in software, which is then executed on one or more programmable hardware components. Such hardware components may comprise a general-purpose processor, a Digital Signal Processor (DSP), a micro-controller, etc.

As indicated by dashed lines, apparatus 200 is optionally implemented in a vehicle 2100, e.g. in the above described vehicle.

Optionally, the proposed concept is implemented in an infrastructure component 2200 remote from the vehicle. Respectively, the method 100 may be executed on a data processing circuit (of the infrastructure component) remote from the vehicle.

Some of the above described aspects are described hereinafter with reference to an exemplary application of the proposed concept.

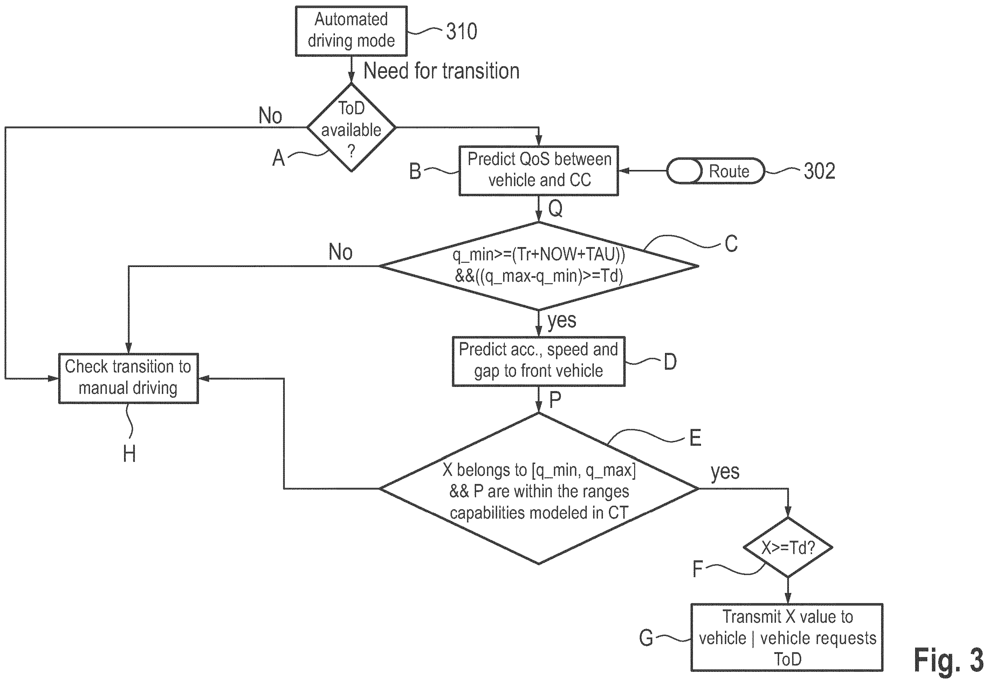

Fig. 3 illustrates a flow chart schematically illustrating an application of the proposed concept.

The application described with reference to Fig. 3 may be (partially) implemented in an infrastructure component and/or the vehicle. In the application described below, the proposed concept is implemented in an (remote) infrastructure component communicatively coupled to the vehicle and/or a remote control center for operating the vehicle from remote.

As can be seen from the flow chart, the vehicle may be operated in an automated driving mode 310 in accordance with a predefined operational design domain (ODD). Then, a reason for changing the mode may occur. The reason, e.g., relates to a predicted imminent deadlock situation or a defect of the vehicle.

In step A, it is determined whether tele-operated driving (ToD) is available. For this, the infrastructure component checks whether respective equipment for remote driving is operational and/or whether the communication link can be established. If not, step H may be executed where it is determined whether a transition to the manual driving mode is possible. If so, the infrastructure component may instruct the vehicle to switch to the manual driving mode. Otherwise, if ToD is available, step B may follow which comprises determining 130 the pQoS. For this, a planned route 302 of the vehicle may be used. The planned route 302, e.g., indicates a path which the vehicle will follow. Together with information on a spatial distribution of the QoS, the planned route allows to determine for the pQoS where and/or when the QoS is sufficient and/or when and/or where the QoS is insufficient. The information on the spatial distribution, e.g., is obtained from a history of the QoS with respect to a respective location of the vehicle.

The pQoS allows to predict a time interval Q for which a communication link between the vehicle and the remote control center can be established and for which the communication link provides a sufficient QoS. The time interval Q, e.g., is specified by Q = [q_max - q_min], wherein q_max denotes a point in time until which the QoS of the communication link is sufficient for remote driving according to the pQoS and q_min is indicative of the earliest point in time at which the communication link can be established. q_min, e.g., is specified by q_min ≥ Tr + NOW + TAU, wherein Tr denotes a reaction latency of the remote control center for reacting on request for remote driving, NOW denotes the current time, and TAU denotes a communication latency for switching from the automated driving mode to the remote driving mode. In some embodiments, Tr may also comprise a reaction time of the remote driver.

In a subsequent step C, the time interval Q is compared to a threshold Td indicative of a desired minimum period of time for which the vehicle is to be operated in the remote driving mode in case of switching to the remote driving mode. Td is at least equal or larger than a reaction time it takes the remote driver to take over control of the vehicle when switching to the remote driving mode. In practice, Td may be larger than the reaction time and, e.g., is equal to a predefined interval for which it is economically reasonable and/or convenient for the driver in the vehicle to operate the vehicle in the remote driving mode. If Q is smaller than Td, then step H follows. Otherwise, if Q is equal to or larger than Td, step D follows.

In step D, values P for acceleration, speed/velocity of the vehicle, and/or its distance to one or other vehicles are determined using predefined motion models and/or information on the route 302 and/or on a current traffic situation to predict information (e.g. time and/or place) on one or more future traffic situations and a future traffic situation for switching to the remote driving mode based on driving preferences CT and the values P. The information on the current traffic situation, e.g., comprises information on a current acceleration (2D or 3D if available), speed/velocity (2D or 3D if available), location of the vehicle, and/or its current distance to one or more other vehicles. Also, information on a level of automation in the automated driving mode may be used for determining future traffic situations.

The driving preferences CT, e.g., are determined in the manner described herein. As described above, the driving preferences, e.g., are indicative of ranges for the values P (acceleration, speed/velocity of the vehicle, and/or its distance to one or other vehicles) in the future traffic situations. Also, the driving preferences may depend on a current age, psychological and/or health state of the remote driver and/or his or her gender.

Then, in a subsequent step E, it is determined, based on the information on the future traffic situation and Q, whether a remote operation interval X exists which is within Q and, for which the values P are within the ranges defined by the driving preferences. If not, step H will follow and the vehicle may switch from the automated driving mode to the manual driving mode. If such a remote operation interval X exists, step F will follow where it is checked whether remote operation interval X is larger than Td. If not, step H may follow and the vehicle may switch from the automated driving mode to the manual driving mode. If X is larger than Td, X is provided to the vehicle and the vehicle orchestrates switching from the automated driving mode to the remote driving mode in accordance with X in step G.

The skilled person having benefit from the present disclosure will appreciate that for or in addition to the times or durations (e.g. X, Td, Q) mentioned herein, alternatively or additionally, locations, areas, and/or road sections may be used for a location-based handover.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

### List of reference signs

- 100: method for a vehicle
- 110: determining driving preferences
- 120: predicting information on a future traffic situation
- 130: determining a pQoS
- 140: predicting a remote operation interval
- 150: deciding for or against switching
- 200: apparatus
- 212: one or more interfaces
- 214: data processing circuit
- 302: planned route
- 310: automated driving mode
- 2100: vehicle
- 2200: infrastructure component
- A-H: steps

## Claims

1. A method (100) for a vehicle configured to be remotely operated by a remote driver in a remote driving mode and to be operated at least partially automatically in an automated driving mode, the method (100) comprising:
determining (110) driving preferences of the remote driver from the driving behavior of the remote driver, wherein the driving preferences comprise one or more conditions for a future traffic situation;
collecting information on a current traffic situation of the vehicle using one or more environmental sensors;
predicting, using a predefined motion model and the information on the current traffic situation, a future traffic situation and predicting (120), based on a comparison of the one or more conditions and the future traffic situation, information on a future traffic situation for switching from the automated driving mode to the remote driving mode;
determining (130) a predicted quality of service, pQoS, of a communication link for the remote driving mode;
predicting (140) a remote operation interval for which the vehicle is at least operable in the remote driving mode based on the pQoS and the information on the future traffic situation; and
deciding (150) for or against switching from the automated driving mode to the remote driving mode based on the remote operation interval, wherein deciding (150) for or against switching from the automated driving mode to the remote driving mode comprises:
obtaining a threshold for the remote operation interval, the threshold being at least equal to a reaction time of the remote driver for taking over control of the vehicle;
deciding for switching from the automated driving mode to the remote driving mode if the remote operation interval exceeds or is equal to the threshold; and
deciding against switching from the automated driving mode to the remote driving mode if the remote operation interval falls short of the threshold.

2. The method (100) of claim 1, wherein predicting (120) information on the future traffic situation comprises predicting the information on the future traffic situation further based on information on one or more present and/or planned maneuvers of the vehicle in the automated driving mode, and/or information on a planned route.

3. The method (100) of any one of the preceding claims, wherein predicting (140) the remote operation interval comprises:
obtaining information on a handover duration it takes to transfer control over the vehicle in switching from the automated driving mode to the remote driving mode; and
predicting the remote operation interval based on the handover duration.

4. The method (100) of any one of the preceding claims, wherein the method (100) further comprises determining a handover time and/or a handover place within the remote operation interval for switching from the automated driving mode to the remote driving mode.

5. The method (100) of any one of the preceding claims, wherein the conditions comprise conditions for an acceleration, a velocity of the vehicle, a road profile, and/or a distance to one or more other vehicles in the environment of the vehicle.

6. The method (100) of claim 1 or 5, wherein the method (100) further comprises causing the vehicle in the automated driving mode to adapt driving parameters affecting the future traffic situation to fulfill the conditions.

7. The method (100) of any one of the claims 1, 5 and 6, wherein the remote operation interval is a time interval for which the future traffic situation fulfills the one or more conditions and the pQoS allows sufficient communication via the communication link for remote driving.

8. The method (100) of any one of the preceding claims, wherein deciding against switching from the automated driving mode to the remote driving mode comprises deciding for switching from the remote driving mode to a manual driving mode of the vehicle.

9. A computer program having a program code for performing at least one of the methods of the preceding claims, when the computer program is executed on a computer, a processor, or a programmable hardware component.

10. An apparatus (200) comprising:
one or more interfaces (212) for communication; and
a data processing circuit (214) configured to control the one or more interfaces (212), wherein the data processing circuit (214) and the one or more interfaces (212) are configured to execute one of the methods (100) of claims 1 to 8.

11. A vehicle (2100) comprising the apparatus (200) of claim 10.

12. An infrastructure component (2200) comprising the apparatus (200) of claim 10.

## Patentansprüche

1. Verfahren (100) für ein Fahrzeug, das konfiguriert ist, um durch einen entfernten Fahrer in einem Fernfahrmodus ferngesteuert zu werden und in einem automatisierten Fahrmodus mindestens teilweise automatisch gesteuert zu werden, das Verfahren (100) umfassend:
Bestimmen (110) von Fahrpräferenzen des entfernten Fahrers aus dem Fahrverhalten des entfernten Fahrers, wobei die Fahrpräferenzen eine oder mehrere Bedingungen für eine zukünftige Verkehrssituation umfassen;
Sammeln von Informationen über eine aktuelle Verkehrssituation des Fahrzeugs unter Verwendung eines oder mehrerer Umgebungssensoren;
Vorhersagen, unter Verwendung eines vordefinierten Bewegungsmodells und der Informationen über die aktuelle Verkehrssituation, einer zukünftigen Verkehrssituation und Vorhersagen (120), basierend auf einem Vergleich der einen oder der mehreren Bedingungen und der zukünftigen Verkehrssituation, von Informationen über eine zukünftige Verkehrssituation zum Umschalten von dem automatisierten Fahrmodus in den Fernfahrmodus;
Bestimmen (130) einer vorhergesagten Dienstqualität, pQoS, einer Kommunikationsverbindung für den Fernfahrmodus;
Vorhersagen (140) eines Fernsteuerungsintervalls, für das das Fahrzeug mindestens in dem Fernfahrmodus betriebsfähig ist, basierend auf der pQoS und den Informationen über die zukünftige Verkehrssituation; und
Entscheiden (150) für oder gegen das Umschalten von dem automatisierten Fahrmodus in den Fernfahrmodus basierend auf dem Fernsteuerungsintervall, wobei das Entscheiden (150) für oder gegen das Umschalten von dem automatisierten Fahrmodus in den Fernfahrmodus umfasst:
Erhalten eines Schwellenwerts für das Fernsteuerungsintervall, wobei der Schwellenwert mindestens gleich einer Reaktionszeit des entfernten Fahrers zum Übernehmen der Kontrolle über das Fahrzeug ist;
Entscheiden für das Umschalten von dem automatisierten Fahrmodus in den Fernfahrmodus, wenn das Fernsteuerungsintervall den Schwellenwert überschreitet oder gleich diesem ist; und
und Entscheiden gegen das Umschalten von dem automatisierten Fahrmodus in den Fernfahrmodus, wenn das Fernsteuerungsintervall den Schwellenwert unterschreitet.

2. Verfahren (100) nach Anspruch 1, wobei das Vorhersagen (120) von Informationen über die zukünftige Verkehrssituation das Vorhersagen der Informationen über die zukünftige Verkehrssituation zusätzlich basierend auf Informationen über ein oder mehrere aktuelle und/oder geplante Manöver des Fahrzeugs in dem automatisierten Fahrmodus und/oder Informationen über eine geplante Route umfasst.

3. Verfahren (100) nach einem der vorstehenden Ansprüche, wobei das Vorhersagen (140) des Fernsteuerungsintervalls umfasst:
Erhalten von Informationen über eine Übergabedauer, die benötigt wird, um die Kontrolle über das Fahrzeug bei dem Umschalten von dem automatisierten Fahrmodus in den Fernfahrmodus zu übertragen; und
Vorhersagen des Fernsteuerungsintervalls basierend auf der Übergabedauer.

4. Verfahren (100) nach einem der vorstehenden Ansprüche, wobei das Verfahren (100) ferner das Bestimmen einer Übergabezeit und/oder eines Übergabeortes innerhalb des Fernsteuerungsintervalls zum Umschalten von dem automatisierten Fahrmodus in den Fernfahrmodus umfasst.

5. Verfahren (100) nach einem der vorstehenden Ansprüche, wobei die Bedingungen Bedingungen für eine Beschleunigung, eine Geschwindigkeit des Fahrzeugs, ein Straßenprofil und/oder einen Abstand zu einem oder mehreren anderen Fahrzeugen in der Umgebung des Fahrzeugs umfassen.

6. Verfahren (100) nach Anspruch 1 oder 5, wobei das Verfahren (100) ferner umfasst, dass das Fahrzeug in dem automatisierten Fahrmodus veranlasst wird, Fahrparameter anzupassen, die die zukünftige Verkehrssituation betreffen, um die Bedingungen zu erfüllen.

7. Verfahren (100) nach einem der Ansprüche 1, 5 und 6, wobei das Fernsteuerungsintervall ein Zeitintervall ist, für das die zukünftige Verkehrssituation die eine oder die mehreren Bedingungen erfüllt und die pQoS eine ausreichende Kommunikation über die Kommunikationsverbindung für das Fernfahren zulässt.

8. Verfahren (100) nach einem der vorstehenden Ansprüche, wobei das Entscheiden gegen das Umschalten von dem automatisierten Fahrmodus in den Fernfahrmodus das Entscheiden für das Umschalten von dem Fernfahrmodus in einen manuellen Fahrmodus des Fahrzeugs umfasst.

9. Computerprogramm, das einen Programmcode aufweist, zum Durchführen mindestens eines der Verfahren nach den vorstehenden Ansprüchen, wenn das Computerprogramm auf einem Computer, einem Prozessor oder einer programmierbaren Hardwarekomponente ausgeführt wird.

10. Einrichtung (200), umfassend:
eine oder mehrere Schnittstellen (212) für die Kommunikation; und
eine Datenverarbeitungsschaltung (214), die konfiguriert ist, um die eine oder die mehreren Schnittstellen (212) zu steuern, wobei die Datenverarbeitungsschaltung (214) und die eine oder die mehreren Schnittstellen (212) konfiguriert sind, um eines der Verfahren (100) nach den Ansprüchen 1 bis 8 auszuführen.

11. Fahrzeug (2100), umfassend die Einrichtung (200) nach Anspruch 10.

12. Infrastrukturkomponente (2200), umfassend die Einrichtung (200) nach Anspruch 10.

## Revendications

1. Procédé (100) pour un véhicule configuré pour être commandé à distance par un conducteur distant dans un mode de conduite à distance et pour être commandé au moins partiellement automatiquement dans un mode de conduite automatisé, le procédé (100) comprenant :
la détermination (110) de préférences de conduite du conducteur distant à partir du comportement de conduite du conducteur distant, dans lequel les préférences de conduite comprennent une ou plusieurs conditions pour une situation de circulation future ;
la collecte d'informations sur une situation de circulation actuelle du véhicule à l'aide d'un ou plusieurs capteurs environnementaux ;
la prédiction, à l'aide d'un modèle de mouvement prédéfini et des informations sur la situation de circulation actuelle, d'une situation de circulation future et la prédiction (120), sur la base d'une comparaison de la ou des conditions et de la situation de circulation future, d'informations sur une situation de circulation future pour le passage du mode de conduite automatisée au mode de conduite à distance ;
la détermination (130) d'une qualité de service prédite, pQoS, d'une liaison de communication pour le mode de conduite à distance ;
la prédiction (140) d'un intervalle de commande à distance pendant lequel le véhicule peut au moins fonctionner dans le mode de conduite à distance sur la base du pQoS et des informations sur la situation de circulation future ; et
le fait de décider (150) de passer ou non du mode de conduite automatisée au mode de conduite à distance sur la base de l'intervalle de commande à distance, dans lequel la décision (150) de passer ou non du mode de conduite automatisée au mode de conduite à distance comprend :
l'obtention d'un seuil pour l'intervalle de commande à distance, le seuil étant au moins égal à un temps de réaction du conducteur distant pour prendre le contrôle du véhicule ;
le fait de décider de passer du mode de conduite automatisée au mode de conduite à distance si l'intervalle de commande à distance dépasse ou est égal au seuil ; et
le fait de décider de ne pas passer du mode de conduite automatisée au mode de conduite à distance si l'intervalle de commande à distance est inférieur au seuil.

2. Procédé (100) selon la revendication 1, dans lequel la prédiction (120) d'informations sur la situation de circulation future comprend la prédiction des informations sur la situation de circulation future sur la base en outre d'informations sur une ou plusieurs manœuvres présentes et/ou planifiées du véhicule dans le mode de conduite automatisée et/ou d'informations sur un itinéraire planifié.

3. Procédé (100) selon l'une quelconque des revendications précédentes, dans lequel la prédiction (140) de l'intervalle de commande à distance comprend :
l'obtention d'informations sur une durée de transfert nécessaire pour transférer la commande du véhicule lors du passage du mode de conduite automatisée au mode de conduite à distance ; et
la prédiction de l'intervalle de commande à distance sur la base de la durée du transfert.

4. Procédé (100) selon l'une quelconque des revendications précédentes, dans lequel le procédé (100) comprend en outre la détermination d'un temps de transfert et/ou d'un lieu de transfert dans l'intervalle de commande à distance pour passer du mode de conduite automatisé au mode de conduite à distance.

5. Procédé (100) selon l'une quelconque des revendications précédentes, dans lequel les conditions comprennent des conditions pour une accélération, une vitesse du véhicule, un profil de route, et/ou une distance par rapport à un ou plusieurs autres véhicules dans l'environnement du véhicule.

6. Procédé (100) selon la revendication 1 ou 5, dans lequel le procédé (100) comprend en outre le fait d'amener le véhicule dans le mode de conduite automatisée à adapter des paramètres de conduite affectant la situation de circulation future pour remplir les conditions.

7. Procédé (100) selon l'une quelconque des revendications 1, 5 et 6, dans lequel l'intervalle de commande à distance est un intervalle de temps pendant lequel la situation de trafic future remplit la ou les conditions et la pQoS permet une communication suffisante par l'intermédiaire de la liaison de communication pour la conduite à distance.

8. Procédé (100) selon l'une quelconque des revendications précédentes, dans lequel la décision de ne pas passer du mode de conduite automatisée au mode de conduite à distance comprend la décision de passer du mode de conduite à distance à un mode de conduite manuelle du véhicule.

9. Programme informatique ayant un code de programme pour effectuer au moins l'un des procédés des revendications précédentes, lorsque le programme informatique est exécuté sur un ordinateur, un processeur, ou un composant matériel programmable.

10. Appareil (200) comprenant :
une ou plusieurs interfaces (212) pour la communication ; et
un circuit de traitement de données (214) configuré pour commander la ou les interfaces (212), dans lequel le circuit de traitement de données (214) et la ou les interfaces (212) sont configurés pour exécuter l'un des procédés (100) selon les revendications 1 à 8.

11. Véhicule (2100) comprenant l'appareil (200) selon la revendication 10.

12. Composant d'infrastructure (2200) comprenant l'appareil (200) selon la revendication 10.
